# EUROPEAN PATENT SPECIFICATION

(11) **EP 1 502 341 B1**
(45) Date of publication and mention of the grant of the patent: **14.09.2016**
(21) Application number: 03747509.2
(22) Date of filing: 23.04.2003
(51) Int. Cl.: H02G 7/05

(54) **SUSPENSION CLAMP FOR CONDUCTORS AND TOOLS THEREOF FOR INSTALLING THE CLAMP ON AN ELECTRIC LINE**
AUFHÄNGUNGSKLAMMER FÜR LEITUNGEN UND WERZEUG ZUM INSTALLIEREN VON KLAMMERN AN ELEKTRISCHEN FREILEITUNGEN
PINCE DE SUSPENSION POUR CONDUCTEURS ET OUTILS POUR INSTALLER LA SUSPENSION SUR UNE LIGNE ÉLECTRIQUE

(30) Priority: 29.04.2002 IT TO20020361
(43) Date of publication of application: 02.02.2005
(73) Proprietor: CONVEYTECH S.R.L. IN LIQUIDAZIONE, 10139 Torino (IT)
(72) Inventor: BOSCHETTI, Mario, 11020 Donnas (IT)
(74) Representative: Dini, Roberto
(86) International application number: PCT/IB2003/001526
(87) International publication number: WO 2003/094315

(56) References cited:
- DE-C- 512 968
- FR-A- 2 443 757

## Description

The present invention relates to a suspension clamp for conductors, particularly suitable for supporting suspended conductors pertaining to medium and high voltage overhead electric lines, with associated tools for its installation on an electric line.

As known, medium and high voltage overhead electric lines consist of a plurality of conductors, which are supported by means of appropriate poles at a certain height. These poles have on their upper end various pole head brackets, being apt to support the above conductors. An example of such supports is disclosed by the Italian patent application for Industrial Invention no. TO2000A000822, which carry suspended chains of isolating elements with clamps on their ends for hooking and tightening the electric current conductors.

High voltage electric lines are built according to the technique using suspended isolators chains. In the last few years, medium voltage electric lines have been converted from lines with rigid isolators to lines with suspended isolators. All over the world techniques are being developed for working in proximity of live electric lines, in order to avoid blackouts in the supply of electric energy to users, with consequent discomfort. For this reason, an increasing number of operators for electric current supply prefer to work with live lines when actuating the above conversion or executing regular maintenance.

These activities should be executed according to required safety precautions following precise safety norms to protect operators. For instance, when operating in contact with live elements, these operators have to use heavy isolating gloves besides their usual working gloves; however, these equipment are greatly limiting manual capacity. As an alternative, tools may be assembled on isolating rods for working safely at distance, but this entails obvious difficulties and awkwardness.

At present, conversion and maintenance works on live lines can be performed according to three different methods:
- Remote method, according to which installation is executed using tools assembled on isolating rods, ensuring a safety distance between the operator, the live elements and the earth;
- Contact method, where the operator is isolated with respect to the earth, so as to safely reach and touch the conductor, provided isolating gloves and/or arm bands are worn besides usual working gloves;
- Potential method, according to which the operator adequately isolated from the earth and other elements with a different potential from the potential of the live elements on the line can touch the conductor, provided protection is ensured by a conducting overall preliminarily connected to the conductor.

Operation on high voltage lines in Italy is presently performed according to the remote method and potential method, whereas on medium voltage lines it is only performed according to the remote method. It is predicted that in a couple of years operation will also take place using the contact method.

It should also be noticed that the use of about 3 mm thick isolating arm bands considerably reduces both the sensitivity and mobility of the operator's fingers, so that those operations requiring a certain precision are no longer possible, such as inserting bodies in narrow spaces and/or repositioning components during clamps application, handling tiny dimension elements, and so on.

The above preamble is needed to explain the technical problem related to the present invention. In Italy, in fact, through the increasing application of the remote method, operators can work with the tools assembled on isolating rods of appropriate length, as mentioned above. In the instance of 15 KV lines the isolating rod has a minimum 70 cm length, so when operating on an electric line the assembly of screws or nuts is very difficult, as they often fall on the ground and go lost in the surrounding green. Fitting small elements and fastening them with the relevant screws, nuts and washers will prove even more difficult, as the latter may fall on the ground whenever the operator is slightly inattentive.

Additionally, also the contact method does not ensure a precise operation when installing the clamps on electric lines, since the operators are considerably hindered in their movements and have a poor sensitivity due to their wearing heavy isolating gloves and/ or arm bands, which are further covered with usual working gloves.

Concluding, in order to install and tighten the clamps on the conductors in a fast, effective and safe manner, they must be so structured for the operator to perform a minimum number of operations and require no particular operations to be implemented by the operator's hands and/or fingers near the live elements.

Document DE 512 968 shows a clamp where a conductor can be rested inside its hooked body. A jaw can be operated from an open position, where it is inclined to allow the conductor to be lied in the body, and a tightened position, where some guiding means associated to the jaw assume vertical position to be tightened.

Document FR 2 433 757 shows an articulated type or clamp where a mechanism, suitable to carry out a pre-loaded tightening on a conductor, is associated to a main body of the same clamp.

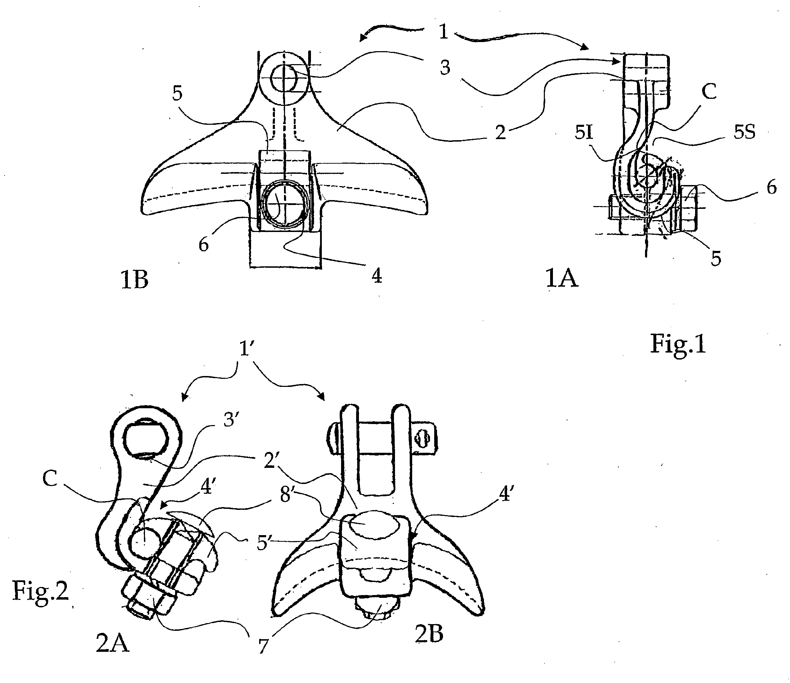

Figure 1 is illustrating a clamp known at the present state of the art, indicated in its whole with 1, shown in the front view 1A and lengthwise view 1B. This clamp 1 consists of a body 2 having a front section in the form of a hook, and a lengthwise extension forming a symmetric cradle with respect to an eyelet 3, being apt to normally engage a chain of suspended isolators of an electric line, not illustrated for simplicity's sake.

In line with the crosswise symmetric plane through the eyelet 3, the cradle of the body 2 is interrupted by a flaring 4, in which a jaw 5 is engaged, which can be tightened crosswise to the body 2 by means of a flat screw 6. The upper portion 5S of the jaw 5 has a semicircular lead-in 5I for housing and tightening a conductor C. In order to install the clamp 1, the jaw 5 is removed or anyway opened, so as to fully release the cradle of the body 2. This operation requires a fine manual operation, which is difficult to actuate if the line is live. The conductor C is then set down in the cradle of the body 2.

Reassembly of the jaw 5 is even more difficult, since the screw 6 has to be positioned back, closed and tightened with a most precise fine manual operation.

It is also important to point out how a dismantling of such a clamp 1 having been tightened to the conductor C for many years may cause several operational difficulties, even if made from stainless material. After having been pressed one on top of the other for a long time, the materials end up with a final telescoping effect, i.e. practically sticking to each other. Therefore, in order to release the jaw 5 a fine manual operation is necessary after loosening the screw 6.

It should also be noticed that considerable problems for inserting the conductor C inside the cradle of the body 2 are caused by the configuration of the jaw 5, in particular its upper portion 5S with the semicircular lead-in 5I, mainly due to a basic reason, i.e. the position of the jaw 5 sideways to the body 2 combined with its horizontal or crosswise motion during a tightening or release operation of the clamp 1.

Thus, when the clamp is installed after loosening the screw 6, the jaw 5 has to be opened manually with difficulty, with the risk of exceeding the crosswise extension of the flaring 4. This operation allows the conductor C to enter the cradle of the body 2 without interfering with the edge of the upper portion 5S of the jaw 5. The jaw 5, no longer restrained by the edges of the flaring 4, can rotate its upper edge 5S up to 180°. As a result, during the closure the jaw 5 has to be taken back to its correct work position before tightening the screw 6, i.e. it is still necessary to operate directly and manually on a tiny component.

Moreover, during the insertion stage of the conductor C in the cradle of the body 2, the conductor C coming in contact with the upper edge 5S of the open jaw 5 may often cause it to slide on the screw 6 and occupy the access port of the conductor C to the cradle, hindering it from resting on it. Therefore, the operation has to be repeated with a consequent loss of time and discomfort for the operator.

In conclusion, an operator would be forced to perform once more a manual contact operation for a remote repositioning of the jaw 5, and then guide the conductor C inside the cradle of the body 2, finally hoping to be able to perform the operation without skimming the jaw 5. Also, the jaw 5 should necessarily have a closed form on its top, otherwise it would be unable to tighten and sufficiently wind up the conductor C, basically due to the jaw 5 being displaced horizontally by the screw 6.

Figure 2 is illustrating a variation of the known solution described above, partially sectioned in the front or crosswise view 2A and in the side or lengthwise view 2B. For simplicity's sake, the same numbers of Figure 1 have been adopted for the corresponding elements of the clamps, just adding an apex " ' ".

The clamp 1' differs from the clamp of Figure 1 as follows:
- the cross section of the cradle of the body 2' in line with the flaring 4' has the form of an inclined L, one side of the above L having a tightening device 5', 7, 8 engaged on it;
- it has a tightening element, in particular a nut 7, with a diagonal axis and access from the bottom on one side of the clamp 1';
- the tightening device 5', 7, 8 does not allow insertion of the conductor C with the jaw 5' assembled, as there is no physical space for it to go through;
- the tightening element of the jaw 5' consists of a nut 7, which is engaged by screwing on a threaded pin 8 through the jaw 5' and body 2' of the clamp 1'.

An obvious drawback of the present solution is represented by the operator being in contact with the clamp 1' when the latter is installed on an electric line with its relevant conductor C. Actually, remote operation is not possible for quite a number of operations requiring a subtle handicraft, such as assembling the whole tightening device 5', 7, 8 or keeping the conductor C in position in the notch of the L forming the body 2' of the clamp 1'.

Globally, in view of the above reasons, the common clamps 1 and 1' at the present state of the art have the following drawbacks:
a) on a line without voltage supply they require a high handicraft for the assembly and dismantling of tiny elements, actually ranging from 5 to 30 mm; these operations are difficult to perform even when wearing usual working gloves alone;
b) as to working on live lines, execution of the operations under item a) is practically impossible, either operating with the remote method and the use of tools assembled on isolated rods or contact method, wearing gloves and arm bands;
c) after loosening the screw 6 for opening the clamp 1, the jaw 5 is not restrained in a delimited position and is free to rotate and move along the screw 6. When moving, the jaw 5 represents a considerable hindrance for inserting the conductor C in its seat;
d) if the screw 6 is not perfectly controlled during the loosening stage, which proves quite difficult when working on a live line, the tightening device 5, 6 may become dismantled and its components fall on the ground, where they often get lost in the green at the foot of the electric line.

The present invention intends to solve the above drawbacks and provide a suspension clamp for conductors, in particular suitable for supporting suspended conductors pertaining to medium and high voltage overhead electric lines and associated tools for installing the clamp on an electric line, having improved features. In this frame, it is the main object of the present invention to provide a suspension clamp for conductors, which ensures easy operation both during the initial installation and subsequent maintenance operations on an electric line, specially when operating on a live line.

Therefore, it is one object of the present invention to release the conductor and place it back in the clamp through simple, fast and effective operations, which can also be performed on live electric lines.

Another object of the present invention is to provide a clamp, which allows to hook the conductor to the clamp without causing any hindrances to its elements, being able to support it independently in full safety.

Another object of the present invention is to provide a clamp, which can be closed and tightened through one simple operation to be performed on a live line in full safety for the operator, either actuating the remote method and/ or contact method. Another object of the present invention is to perform all installing operations of the clamp safely, without the risk of accidental dismantling of the clamp, with a consequent fall and loss of its components.

A further object of the present invention is to perform an easy opening of the clamp also when the conductor has remained tightened inside it for a long period of time, without the risk of the jaw sticking to the clamp body.

In order to achieve such aims, it is the object of the present invention to provide a suspension clamp for conductors comprising the features of claim 1.

Further objects, features and advantages of the present invention will become apparent from the following detailed description and annexed drawings, which are supplied by way of non limiting example, wherein:
- Fig. 1 shows a lengthwise view 1A and a side view 1B of a common clamp in the technical field;
- Fig. 2 shows a partially sectioned crosswise view 2A and lengthwise view 2B of a known embodiment of the clamp of Fig. 1;
- Fig. 3 shows a partially sectioned crosswise view with respect to a crosswise symmetry plane of a clamp according to the present invention;
- Fig. 4 shows a lengthwise view of the clamp of Fig. 2;
- Fig. 5 shows a top view of the clamp of Fig. 1, in which a detail has been omitted for clarity's sake;
- Fig. 6 is a representative view of a tool 6A according to the present invention and of a component 6B being apt to implement installation of the clamp of Fig. 3.

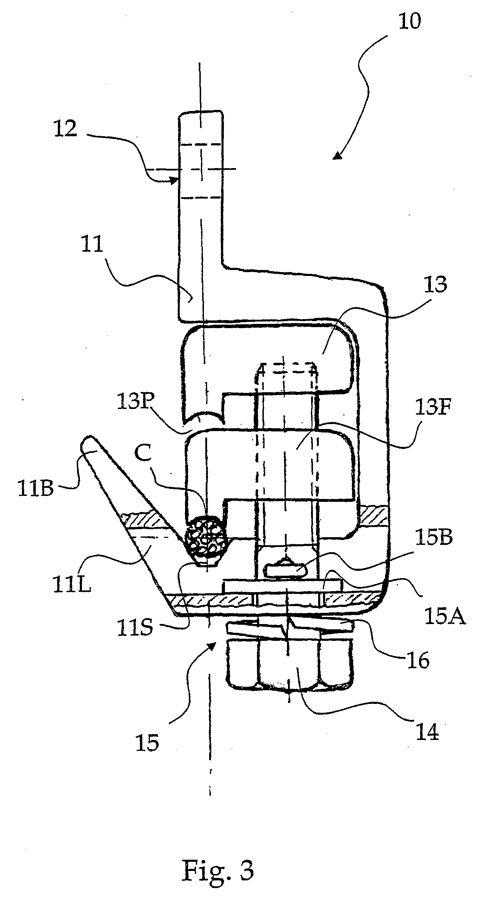

Fig. 3-5 are representing a clamp according to the present invention, indicated in its whole with 10, which consists of a main body 11 symmetric with respect to a tracing symmetry cross plane S. On its top and in line with the above symmetry plane S, the body 11 has an eyelet 12 connected to a connector of a chain of suspended isolators of an electric line, the latter elements not represented for simplicity's sake.

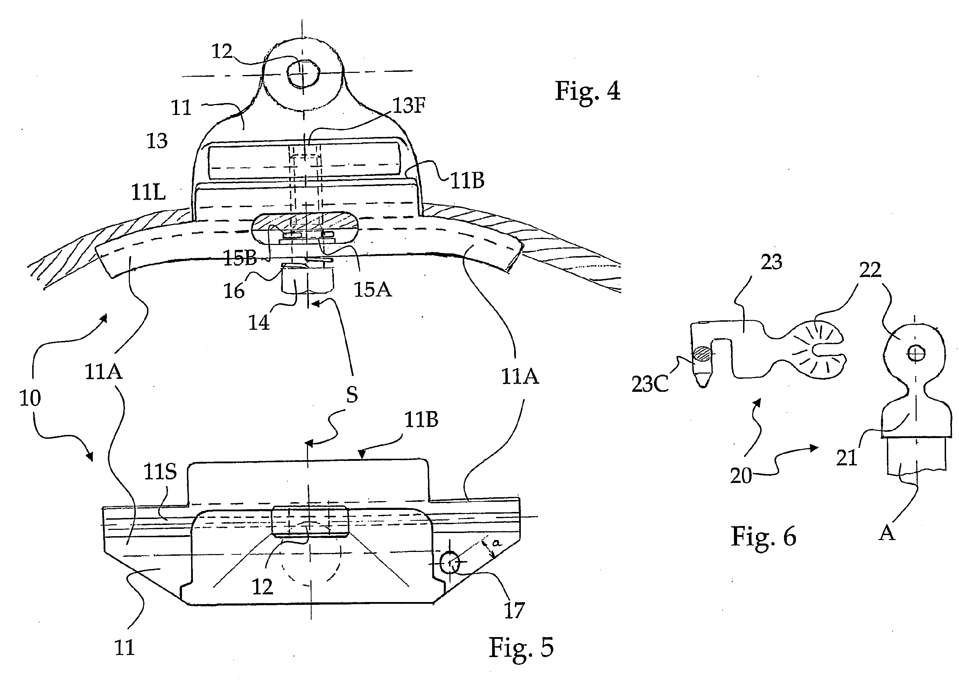

Fig. 3 is representing a partially sectioned crosswise view of the main body 11 substantially in the form of an upturned "C" ending downwards with an oblique extended lip 11B, the edge of which protrudes outside more than the corresponding bulk of the body 11 near the eyelet 12. Underneath the body 11, i.e. where the lip 11B joins the lower portion of the body 11, a groove 11S extending lengthwise is provided for housing a conductor C right in line with the median lengthwise plane L going through the eyelet 12. Said conductor C is pressed down on its top and locked by a jaw 13 guided by a threaded vertical pin 14 in its vertical travel between an open and closed position. In its maximum open position, the jaw 13 strikes at its stop against the upper length of the body 11 in the form of an upturned "C". In its closed position, the jaw 13 interferes with the conductor C through its shell 13P. The latter, which consists of one piece located in line with the groove 11S, has a curved section and a lengthwise extension nearly equal to the whole body 11, as it can be noticed from Fig. 4.

The threaded pin 14 is located upright with its head facing downwards between the groove 11S and the side wall of the "C" of the main body 11, in line with the symmetry plane S. Said pin 14 is coupled on its top with the jaw 13 in a threaded hole 13F, whereas its bottom engages a through-hole 11D of the body 11 through a stop device 15. The device 15 consists of a washer 15A striking underneath against the surface of a chamber inside said body 11, and a split pin 15B inserted in the shaft of the pin 14, which rests above on the washer 15A to hinder a descent and sliding of the pin 14 in the through hole. Therefore, it is obvious that the above stop device 15 causes the jaw 13 to be lowered and raised between its maximum open and closed position by screwing and unscrewing the pin 14.

Also, there is no possibility for the jaw 13 to come loose from the pin 14 or for the pin 14 to move over the small clearance between the washer 15A and a small washer 16 interlaying between the pin head 14 and the body 11. The above description is well illustrated in Fig. 3 and in the window of Fig. 4.

As it can also be noticed in Fig. 4, where the clamp 10 is represented with the jaw 13 in its open position, the lengthwise extension of the main body 11 has two lower wings 11A arranged symmetrically with respect to the crosswise symmetry plane S, which are in the form of a cradle and have a lengthwise curved extension such to match the curve of the conductor C when hooked in the clamp 10.

Moreover, as clearly illustrated in the top view of the clamp 10 without the jaw 13 of Fig. 5, the hole 17 can be noticed on one wing 11A, as well as the partially arrow-like form of the wings 11A and position of the hole 17 at the "a" distance with respect to the arrow-like edge of the matching wing 11A. Said embodiment can be obtained because a so-called "nail-like" operating tool 20 as illustrated in the lengthwise view in Fig. 6 is apt to engage the hole 17. The operating tool 20 is apt for assembly on a head 21 of an isolating rod A for remote operation on medium and high voltage lines. The head 21 has a universal attachment 22 with a spoke articulation as known at the state of the art, in which a tool body 23 of the operating tool 20 will engage. The tool body 23 has an end portion 23C actually in the form of a nail. Said nail 23C of the operating tool 20 consists of a cylindrical projecting protuberance having a slightly smaller diameter than the hole 17 of the body 11 of the clamp 10. With the outer edge of the remaining portion of the tool body 23, this protuberance determines a slightly higher port than the distance "a" previously delimited on the wing 11A of the body 2 of the clamp 11, obtaining a gain with a little clearance between the elements 23 and 11A when the tool 20 is hooked to the clamp 10.

From the above description it can be easily guessed how the remote operating tool 20 operates, engaging the hole 17 of the body 11 of the clamp 10 with its end portion 23C inserted in it. Through this operation the clamp 10 is restrained in suspension to the chain of suspended isolators of the electric line, hindering its rotation during installation when hooking the conductor C inside it and tightening the jaw 13, or loosening the jaw 13 for dismantling the clamp 10.

Also the operation of the closing/opening mechanism of the clamp 10 on the conductor C can be guessed as previously described with reference to the movement of the jaw 13 guided by the pin 14 with annexed stop device 15.

The inventive concept of the clamp 10 according to the present invention is to provide tightening means, i.e. the jaw 13, having a substantially vertical, continuous progressive motion. In the example illustrated above, the jaw 13 is controlled by the threaded pin 14 fitted with a stop device 15 with respect to the main body 11. Through this motion the main body 11 of the clamp 10 can be obtained with a sufficiently wide access port to the conductor C, which is illustrated in the example with a pronounced diagonal extending lip 11B and a side access port above the main body 11 itself, for the clamp 10 to easily house the conductor C in the inner cradle of the main body 11. Advantageously, the conductor C can be hooked to the clamp 10 through simple remote operations with appropriate tools, i.e. fully safe for the operator in spite of the live electric line on which work is executed.

Conveniently, the jaw 13, pin 14 and stop device 15 are made from stainless steel or other resistant material to weathering agents, for preventing a possible sticking when the mechanisms 13, 14 and 15 of the clamp 10 remain in a closed position for a long time. A likely rust formation and/or impurities between the main body 11 and the jaw 13, which may require special manual operations for the known clamps described above, does not generate any problems with the clamp 10 according to the present invention. Actually, the solution providing the stop device 15 between the pin 14 and the main body 11 will require a moderate torque applied to the screw 14 for generating a big force on the jaw 13, with the pitch of the screw 14 conveniently reduced.

Advantageously, the present invention provides tightening or release of the conductor C from the clamp 10 executing one simple remote operation with the operating tool 20 fitted on the isolated rod A and a socket wrench inserted on another isolated rod.

Advantageously, installation of the conductor C with the clamp 10 according to the present invention can house the conductor C through a simple effective remote operation with no elements hindering it. Moreover, no manual operation is required through a nearby operator for effective work performance.

A further advantage is to avoid definitively the possibility that the elements of the clamp 10 neither will come off or fall on the ground with a good chance to get lost in the underneath vegetation during installation. Once the clamp is factory assembled, it cannot be dismantled in its elements during installation.

It is obvious that many changes are possible for the man skilled in the art to the suspension clamp for conductors, particularly apt to support suspended conductors pertaining to medium and high voltage overhead electric lines, and to the associated tools for installing it previously described, without departing from the novelty principles of the inventive idea; it is also clear that in practical actuation of the invention the components may often differ in form, size, proportions and materials employed from the ones described above by way of example, and be replaced with technical equivalent elements.

In particular, the solutions and stop devices 15 associated to the pin 14 for tightening its movement with respect to the main body 11 of the clamp 10 may differ from the ones described above. Also the front section of the body 11 may be different, provided it is open on one side and be apt to contain inside a jaw 13 moving vertically and having a lip 11B or analogous for warranting an inlet port and favour housing a conductor C to be tightened.

Similarly, the top structure of the main body 11, represented in the above example with an eyelet 12, may have another known or technical equivalent form for fastening the main body 11 to a chain of suspended isolators of an electric line. By way of example, this component may be in the form of a fork with through holes for hooking the clamp 10 by means of pins.

## Claims

1. A suspension clamp for conductors, particularly suitable for supporting suspended conductors pertaining to medium and high voltage overhead electric lines, comprising:
- a body (11),
- restraining means (12) between said body and at least one of said suspended conductors,
- tightening means (13, 13P, 14, 15) associated to said body (11) for tightening at least one of said conductors (C) to said body (11),
said tightening means comprising guiding means (14) suitable to generate a substantially vertical motion of said tightening means (13,13P, 14,15) such in a manner to drive said tightening means (13, 13P, 14, 15) from at least an open position, where said conductor (C) is able to be housed in said body (11), to a closed position where said conductor (C) is clamped,
said body (11) being at least partially formed by open supporting means for housing and statically supporting said conductor (C), said body (11) comprising a part having a crosswise section being suitable to house at least some of said tightening means (13, 13P, 14, 15) inside the area delimited by its outer geometry,
**characterized in that**
said crosswise section of said body (11) has substantially the form of an upturned "C", and said body (11) comprises lead-in means (11L) for housing and supporting said conductor (C) to be tightened in a seat (11S) of said body (11), said lead-in means comprising a lip (11B):
- having a substantially diagonal extension outside the body (11), and
- being formed on the lower end of said body (11) having the form of an upturned "C".

2. A clamp according to claim 1, **characterized in that** said tightening means (13, 13P, 14, 15) comprise a jaw (13) associated to said guiding means (14) for a substantially vertical stroke of said jaw (13).

3. A clamp according to claim 2, **characterized in that** said jaw (13) is housed inside the area delimited by the outer profile of said body (11).

4. A clamp according to claim 3, **characterized in that** said jaw (13) is housed inside said upturned "C" section of said body (11), in particular striking against the lower surface of the upper segment of said upturned "C" section.

5. A clamp according at least to claim 2, **characterized in that** said jaw (13) comprises a pad (13P), being apt to tighten said conductor (C) on the body (11) from above.

6. A clamp according at least to claim 1, **characterized in that** said seat (11S) of said body (11) comprises a groove (11S) near said lead-in means (11L).

7. A clamp according to claims 5 and 6, **characterized in that** said pad (13P) of said jaw (13) is aligned to said groove (11S) of said body (11), with said pad (13P) engaging said conductor (C) in said flaring (11S) during its substantially vertical closing stroke and tightening it.

8. A clamp according to one or more of the previous claims, **characterized in that** said tightening means (13, 13P, 14, 15) comprise a stop device (15) associated to said guiding means (14) and said body (11), so as to substantially hinder their vertical stroke as well as a release of said guiding means (14) from said tightening means (13, 13P, 14, 15) and said body (11).

9. A clamp according to claim 1 and 2, **characterized in that** said guiding means comprise a pin (14), being apt to engage a threaded hole (13F) of said jaw (13).

10. A clamp according to claims 8 and 9, **characterized in that** said stop device (15) comprises a washer (15A), which strikes below against a surface of a chamber inside said body (11), and a split pin (15B) inserted in the shaft of said pin (14), being apt to hinder a descent of the threaded pin (14) and stop its transfer on said washer (15A).

11. A clamp according to one or more of the previous claims, **characterized in that** at least some of said tightening means (13, 13P, 14, 15) are made from stainless steel or other material resistant to weathering agents.

12. A clamp according to one or more of the previous claims, **characterized in that** said body (11) of said clamp (10) is associated to further means (17), being suitable to ensure a hooking of a portion of an operating tool (20).

13. A clamp according to the previous claim, **characterized in that** said further means comprise a hole (17) on said body (11), in a position having access from outside.

14. A clamp according to the previous claim, **characterized in that** said body (11) comprises at least a wing (11A) solidly connected to said body (11) and having a lengthwise extension, in which said hole (17) is made.

15. A clamp according to the previous claim, **characterized in that** said hole (17) is located at distance from an edge of said wing (11A) of said body (11), which distance is such to make said hole (17) easy for access from outside and from below of a portion of an operating tool (20).

16. A system comprising a suspension clamp for conductors according to one or more of the previous claims from 1 to 15 and a tool for installing said suspension clamp on an overhead electric line, said tool comprising a rod (A) with a head (21) associated to it, which head (21) is associated to a tool body (23),
**characterized in that** said tool body (23) comprises engaging means (23C) that cooperate with further means (17) of a body (11) of said clamp (10) for obtaining a gain with a little clearance between said tool body (23) and the body (11) of said clamp (10) when said tool (20) is hooked to the clamp (10).

17. A system according to the previous claim, **characterized in that** said engaging means comprise a projecting protuberance (23C), being apt to engage inside said further means (17) of said body (11) of said clamp (10).

18. A system according to claim 17, **characterized in that** said projecting protuberance (23C) maintains a distance from the remaining tool body (23), substantially equal to the distance between said further means (17) and the edge of the wing (11A) of said body (11) to which said further means (17) are associated, in order to provide a firm hooking of said operating tool (20) inside said clamp (10).

19. A system according to the previous claim, **characterized in that** said further means comprise a hole (17) having a slightly larger size than the section related to said protuberance for a safe hooking of said operating tool (20) to said clamp (10).

## Patentansprüche

1. Aufhängungsklammer für Leitungen, insbesondere geeignet zum Unterstützen von ausgesetzten Leitungen betreffend elektrische Mittel- und Hochspannungs-Oberleitungen, umfassend:
- einen Körper (11),
- Rückhaltemittel (12) zwischen dem Körper und mindestens einer der ausgesetzten Leitungen,
- Festziehmittel (13, 13P, 14, 15), welche mit dem Körper (11) verbunden sind, um mindestens eine der Leitungen (C) an dem Körper (11) festzuziehen,
wobei die Festziehmittel Führungsmittel (14) umfassen, welche dazu geeignet sind, eine im Wesentlichen vertikale Bewegung der Festziehmittel (13, 13P, 14, 15) zu erzeugen, derart dass die Festziehmittel (13, 13P, 14, 15) von mindestens einer offenen Position, in welcher die Leitung (C) in dem Körper (11) untergebracht werden kann, zu einer geschlossenen Position, in welcher die Leitung (C) eingespannt ist, antreibbar sind,
wobei der Körper (11) zumindest teilweise durch offene Stützmittel zum Unterbringen und statischen Stützen der Leitung (C) gebildet ist, wobei der Körper (11) einen Teil umfasst, welcher einen Querschnitt aufweist, welcher dazu geeignet ist, zumindest einen Teil der Festziehmittel (13, 13P, 14, 15) in dem Bereich, welcher durch seine Außengeometrie abgegrenzt ist, unterzubringen,
**dadurch gekennzeichnet, dass**
der Querschnitt des Körpers (11) im Wesentlichen die Form eines nach oben gewandten "C" aufweist, und der Körper (11) Einführungsmittel (11L) zum Unterbringen und Stützen der in einem Sitz (11S) des Körpers (11) festzuziehenden Leitung (C) umfasst, wobei die Einführungsmittel eine Lippe (11 B) umfassen:
- welche eine im Wesentlichen diagonale Erstreckung außerhalb des Körpers (11) aufweist und
- am unteren Ende des Körpers (11) gebildet ist, und die Form eines nach oben gewandten "C" aufweist.

2. Eine Klammer gemäß Anspruch 1, **dadurch gekennzeichnet, dass** die Festziehmittel (13, 13P, 14, 15) eine Spannbacke (13) umfassen, welche mit den Führungsmitteln (14) für einen im Wesentlichen vertikalen Hub der Spannbacke (13) verbunden ist.

3. Eine Klammer gemäß Anspruch 2, **dadurch gekennzeichnet, dass** die Spannbacke (13) in dem durch das Außenprofil des Körpers (11) abgegrenzten Bereich untergebracht ist.

4. Eine Klammer gemäß Anspruch 3, **dadurch gekennzeichnet, dass** die Spannbacke (13) in dem nach oben gewandten "C" Abschnitt des Körpers (11) untergebracht ist, insbesondere gegen die untere Oberfläche des oberen Segments des nach oben gewandten "C" Abschnitts stößt.

5. Eine Klammer zumindest nach Anspruch 2, **dadurch gekennzeichnet, dass** die Spannbacke (13) ein Anpassungsglied (13P) umfasst, welches dazu geeignet ist, die Leitung (C) an dem Körper (11) von oben festzuziehen.

6. Eine Klammer zumindest nach Anspruch 1, **dadurch gekennzeichnet, dass** der Sitz (11S) des Körpers (11) eine Nut (11S) in der Nähe der Einführungsmittel (11L) umfasst.

7. Eine Klammer gemäß Anspruch 5 und 6, **dadurch gekennzeichnet, dass** das Anpassungsglied (13P) der Spannbacke (13) an der Nut (11S) des Körpers (11) ausgerichtet ist, wobei das Anpassungsglied (13P) die Leitung (C) in der Aufweitung (11 S) während seines im Wesentlichen vertikalen Schließhubs koppelt und sie festzieht.

8. Eine Klammer gemäß einem oder mehreren der vorhergehenden Ansprüche, **dadurch gekennzeichnet, dass** die Festziehmittel (13, 13P, 14, 15) eine Stoppvorrichtung (15) umfassen, welche mit dem Führungsmittel (14) und dem Körper (11) verbunden ist, um im Wesentlichen sowohl ihren vertikalen Hub als auch ein Lösen der Führungsmittel (14) von den Festziehmitteln (13, 13P, 14, 15) und dem Körper (11) zu verhindern.

9. Eine Klammer gemäß Anspruch 1 und 2, **dadurch gekennzeichnet, dass** die Führungsmittel einen Pin (14) umfassen, welcher dazu geeignet ist, eine Gewindebohrung (13F) der Spannbacke (13) zu koppeln.

10. Eine Klammer gemäß Anspruch 8 und 9, **dadurch gekennzeichnet, dass** die Stoppvorrichtung (15) eine Unterlegscheibe (15A), welche unten gegen eine Oberfläche einer Kammer in dem Körper (11) stößt, und eine Splint (15B), welcher in den Schaft des Pins (14) eingesetzt ist, und dazu geeignet ist, ein Absinken des Gewindepins (14) zu verhindern und dessen Transfer an der Unterlegscheibe (15A) zu stoppen.

11. Eine Klammer gemäß einem oder mehreren der vorhergehenden Ansprüche, **dadurch gekennzeichnet, dass** zumindest ein Teil der Festziehmittel (13, 13P, 14, 15) aus Edelstahl oder anderen gegenüber Verwitterungswirkstoffen resistenten Materialen gebildet sind.

12. Eine Klammer gemäß einem oder mehreren der vorhergehenden Ansprüche, **dadurch gekennzeichnet, dass** der Körper (11) der Klammer (10) mit weiteren Mitteln (17) verbunden ist, welche dazu geeignet sind ein Einhaken eines Teils eines Betätigungswerkzeugs (20) zu gewährleisten.

13. Eine Klammer gemäß einem der vorhergehenden Ansprüche, **dadurch gekennzeichnet, dass** die weiteren Mittel ein Loch (17) in dem Körper (11) in einer Position, welche einen Zugang von außen hat, umfassen.

14. Eine Klammer gemäß einem der vorhergehenden Ansprüche, **dadurch gekennzeichnet, dass** der Körper (11) mindestens einen Flügel (11A) umfasst, welcher fest mit dem Körper (11) verbunden ist und eine Längserstreckung aufweist, in welcher das Loch (17) gebildet ist.

15. Eine Klammer gemäß einem der vorhergehenden Ansprüche, **dadurch gekennzeichnet, dass** das Loch (17) von einer Kante des Flügels (11A) des Körpers (11) beabstandet angeordnet ist, wobei der Abstand derart ist, um einen leichten Zugang zu dem Loch (17) von außen und von unterhalb eines Abschnitts eines Betätigungswerkzeugs (20) zu ermöglichen.

16. Ein System umfassend eine Aufhängungsklammer für Leitungen gemäß einem oder mehreren der vorhergehenden Ansprüche 1 bis 15 und ein Werkzeug zum Installieren der Aufhängungsklammer an einer elektrischen Oberleitung, wobei das Werkzeug einen Stab (A) mit einem damit verbundenen Kopf (21) umfasst, wobei der Kopf (21) mit einem Werkzeugkörper (23) verbunden ist,
**dadurch gekennzeichnet, dass** der Werkzeugkörper (23) Kopplungsmittel (23C) umfasst, die mit weiteren Mitteln (17) des Körpers (11) der Klammer (10) kooperieren, um eine Verstärkung mit einem kleinen Abstand zwischen dem Werkzeugkörper (23) und dem Körper (11) der Klammer (10) zu erhalten, wenn das Werkzeug (20) in der Klammer (10) eingehakt ist.

17. Ein System gemäß dem vorhergehenden Anspruch **dadurch gekennzeichnet, dass** die Kopplungsmittel einen hervorstehenden Vorsprung (23C) umfassen, welcher dazu geeignet ist, in den weiteren Mitteln (17) des Körpers (11) der Klammer (10) zu koppeln.

18. Ein System gemäß Anspruch 17, **dadurch gekennzeichnet, dass** der hervorstehende Vorsprung (23C) von dem restlichen Werkzeugkörper (23) einen Abstand aufrechterhält, welcher im Wesentlichen gleich dem Abstand zwischen den weiteren Mitteln (17) und der Kante des Flügels (11A) des Körpers (11) ist, mit welchem die weiteren Mitteln (17) verbunden sind, um eine feste Verhakung des Betätigungswerkzeugs (20) in der Klammer (10) bereitzustellen.

19. Ein System gemäß des vorhergehenden Anspruchs, **dadurch gekennzeichnet, dass** die weiteren Mittel ein Loch (17) umfassen, welches eine geringfügig größere Größe als der zu dem Vorsprung gehörende Abschnitt zum sicheren Einhaken des Betätigungswerkzeugs (20) in die Klammer (10) aufweist.

## Revendications

1. Pince de suspension pour conducteurs, particulièrement adaptée pour supporter des conducteurs suspendus concernant des lignes électriques aériennes à moyenne et haute tension, comprenant :
- un corps (11),
- des moyens de retenue (12) entre ledit corps et au moins l'un desdits conducteurs suspendus,
- des moyens de serrage (13, 13P, 14, 15) associés audit corps (11) pour serrer au moins l'un desdits conducteurs (C) sur ledit corps (11),
lesdits moyens de serrage comprenant des moyens de guidage (14) adaptés pour générer un mouvement sensiblement vertical desdits moyens de serrage (13, 13P, 14, 15) de manière à entraîner lesdits moyens de serrage (13, 13P, 14, 15) au moins d'une position ouverte, où ledit conducteur (C) peut être logé dans ledit corps (11), à une position fermée où ledit conducteur (C) est fixé,
ledit corps (11) étant au moins partiellement formé par des moyens de support ouverts pour loger et supporter statiquement ledit conducteur (C), ledit corps (11) comprenant une partie ayant une section transversale adaptée pour loger au moins certains desdits moyens de serrage (13, 13P, 14, 15) à l'intérieur de la zone délimitée par sa géométrie extérieure,
**caractérisée en ce que**
ladite section transversale dudit corps (11) a sensiblement la forme d'un « C » retourné et ledit corps (11) comprend des moyens d'entrée (11L) pour loger et supporter ledit conducteur (C) à serrer dans un siège (11S) dudit corps (11), lesdits moyens d'entrée comprenant une lèvre (11B) :
- ayant une extension sensiblement diagonale à l'extérieur du corps (11), et
- étant formé sur l'extrémité inférieure dudit corps (11) ayant la forme d'un « C » retourné.

2. Pince selon la revendication 1, **caractérisée en ce que** lesdits moyens de serrage (13, 13P, 14, 15) comprennent une mâchoire (13) associés auxdits moyens de guidage (14) pour une course sensiblement verticale de ladite mâchoire (13).

3. Pince selon la revendication 2, **caractérisée en ce que** ladite mâchoire (13) est logée à l'intérieur de la zone délimitée par le profil extérieur dudit corps (11).

4. Pince selon la revendication 3, **caractérisée en ce que** ladite mâchoire (13) est logée à l'intérieur de ladite section en « C » retourné dudit corps (11), heurtant en particulier la surface inférieure du segment supérieur de ladite section en « C » retourné.

5. Pince selon au moins la revendication 2, **caractérisée en ce que** ladite mâchoire (13) comprend un patin (13P) apte à serrer ledit conducteur (C) sur le corps (11) par le dessus.

6. Pince selon au moins la revendication 1, **caractérisée en ce que** ledit siège (11S) dudit corps (11) comprend une rainure (11S) près dudit moyen d'entrée (11L).

7. Pince selon les revendications 5 et 6, **caractérisée en ce que** ledit patin (13P) de ladite mâchoire (13) est aligné sur ladite rainure (11S) dudit corps (11), ledit patin (13P) enclenchant ledit conducteur (C) dans ledit évasement (11S) pendant sa course de fermeture sensiblement verticale et le serrant.

8. Pince selon une ou plusieurs des revendications précédentes, **caractérisée en ce que** lesdits moyens de serrage (13, 13P, 14, 15) comprennent un dispositif de butée (15) associé auxdits moyens de guidage (14) et audit corps (11), de façon à entraver sensiblement leur course verticale ainsi qu'une libération desdits moyens de guidage (14) desdits moyens de serrage (13, 13P, 14, 15) et dudit corps (11).

9. Pince selon les revendications 1 et 2, **caractérisée en ce que** lesdits moyens de guidage comprennent une goupille (14), apte à enclencher un trou fileté (13F) de ladite mâchoire (13).

10. Pince selon les revendications 8 et 9, **caractérisée en ce que** ledit dispositif de butée (15) comprend une rondelle (15A), qui heurte en dessous une surface d'une chambre à l'intérieur dudit corps (11), et une goupille fendue (15B) insérée dans l'arbre de ladite goupille (14), apte à entraver une descente de la goupille filetée (14) et à interrompre son transfert sur ladite rondelle (15A).

11. Pince selon une ou plusieurs des revendications précédentes, **caractérisée en ce qu'**au moins certains desdits moyens de serrage (13, 13P, 14, 15) sont réalisés en acier inoxydable ou un autre matériau résistant à des agents de vieillissement.

12. Pince selon une ou plusieurs des revendications précédentes, **caractérisée en ce que** ledit corps (11) de ladite pince (10) est associé à des moyens supplémentaires (17), adaptés pour garantir un accrochage d'une portion d'un outil de commande (20).

13. Pince selon la revendication précédente, **caractérisée en ce que** lesdits moyens supplémentaires comprennent un trou (17) sur ledit corps (11), dans une position ayant un accès par l'extérieur.

14. Pince selon la revendication précédente, **caractérisée en ce que** ledit corps (11) comprend au moins une aile (11A) raccordée rigidement audit corps (11) et ayant une extension dans le sens de la longueur, dans laquelle ledit trou (17) est réalisé.

15. Pince selon la revendication précédente, **caractérisée en ce que** ledit trou (17) est situé à distance d'un bord de ladite aile (11A) dudit corps (11), laquelle distance est de nature à rendre ledit trou (17) facile d'accès par l'extérieur et par en dessous d'une portion d'un outil de commande (20).

16. Système comprenant une pince de suspension pour conducteurs selon une ou plusieurs des revendications 1 à 15 précédentes et un outil pour l'installation de ladite pince de suspension sur une ligne électrique aérienne, ledit outil comprenant une tige (A) avec une tête (21) qui lui est associée, laquelle tête (21) est associée à un corps d'outil (23),
**caractérisé en ce que** ledit corps d'outil (23) comprend des moyens d'enclenchement (23C) qui coopèrent avec des moyens supplémentaires (17) d'un corps (11) de ladite pince (10) pour obtenir un gain avec un petit débattement entre ledit corps d'outil (23) et le corps (11) de ladite pince (10) lorsque ledit outil (20) est accroché à la pince (10).

17. Système selon la revendication précédente, **caractérisé en ce que** lesdits moyens d'enclenchement comprennent une protubérance saillante (23C), apte à s'enclencher à l'intérieur desdits moyens supplémentaires (17) dudit corps (11) de ladite pince (10).

18. Système selon la revendication 17, **caractérisé en ce que** ladite protubérance saillante (23C) maintient une distance par rapport au corps d'outil (23) restant, sensiblement égale à la distance entre lesdits moyens supplémentaires (17) et le bord de l'aile (11A) dudit corps (11) auquel lesdits moyens supplémentaires (17) sont associés, afin de fournir un accrochage ferme dudit outil de commande (20) à l'intérieur de ladite pince (10).

19. Système selon la revendication précédente, **caractérisé en ce que** lesdits moyens supplémentaires comprennent un trou (17) ayant une taille légèrement plus grande que la section relative à ladite protubérance pour un accrochage sécurisé dudit outil de commande (20) à ladite pince (10).
